# FASCICULE DE BREVET EUROPEEN

(11) **EP 3 911 840 B1**
(45) Date de publication et mention de la délivrance du brevet: **21.12.2022**
(21) Numéro de dépôt: 20709263.6
(22) Date de dépôt: 17.01.2020
(51) Int. Cl.: F01D 5/14, F01D 5/18

(54) **AUBE CREUSE CONTENANT UN TREILLIS INTÉRIEUR**
ROTORSCHAUFEL MIT INNERER NETZSTRUKTUR
AIRFOIL WITH INTERNAL LATTICE STRUCTURE

(30) Priorité: 18.01.2019 FR 1900448
(43) Date de publication de la demande: 24.11.2021
(73) Titulaire: Safran Helicopter Engines, 64510 Bordes (FR)
(72) Inventeur: VIAL, Laurence, 77550 MOISSY-CRAMAYEL (FR); VOTIE, Sylvain, Pierre, 77550 MOISSY-CRAMAYEL (FR); BOISSELEAU, Denis, Daniel, Jean, 77550 MOISSY-CRAMAYEL (FR)
(74) Mandataire: Brevalex
(86) Numéro de dépôt international: PCT/FR2020/050066
(87) Numéro de publication internationale: WO 2020/148512

(56) Documents cités:
- WO-A1-2014/151066
- DE-A1-102017 208 631
- US-B2- 7 101 154

## Description

L'invention présente se rapporte à une aube creuse comprenant un treillis intérieur.

Certains exemples de treillis intérieurs (« lattice » en anglais) d'aubes sont décrits dans les documents EP 2 843 192 A1 et 3 015 647 A1. Ils consistent en des structures de mailles tridimensionnelles enchevêtrées qui occupent la cavité de l'aube, dont les bords se joignent à la face interne de la peau extérieure de l'aube, mais qui laissent néanmoins subsister un volume vide important de la cavité entre les mailles. Les dimensions des mailles et leurs agencements peuvent être de genres très différents. Une raison de l'emploi de tels treillis est qu'ils procurent un support à la peau extérieure de l'aube quand celle-ci est fabriquée de façon additive, puisque la matière surplombant la cavité ne pourrait pas être déposée sans un tel support. Mais les treillis sont aussi conçus, dans bien des cas, pour permettre la ventilation et le rafraîchissement de l'aube par un écoulement d'air frais, qui traverse alors le treillis à partir d'une entrée creusée dans le pied ou la tête de l'aube et qui peut être évacué par des orifices traversant la peau extérieure. Les treillis facilitent alors l'évacuation de la chaleur de la peau extérieure de l'aube par conduction et convection, tout en étant aussi responsables d'une perte de charge de l'air de ventilation, qui influe aussi sur les caractéristiques de ventilation.

D'autres documents de l'art antérieur connexe incluent DE 102017208631 A1 (treillis composés de deux structures, comprenant par exemple des cellules où jouent des corps libres d'amortissement des vibrations), US 7101154 B2 (treillis comprenant des zones hétérogènes, avec des irrégularités d'orientation de fils de chaîne (« warp »), et WO 2014/151066 A1 (réseau composé de couches bidimensionnelles superposées de fibres à des écartements différents et de diamètres différents, les fibres ayant des orientations croisées d'une couche à l'autre).

Les mailles des treillis sont en général extrêmement fines et peuvent facilement se rompre sous l'effet de dilatations thermiques ou de déformations mécaniques produites sur l'aube quand elle est en service. Les ruptures s'accompagnent d'une destruction partielle et aléatoire de la structure du treillis, modifient donc de manière imprévisible les caractéristiques de l'évacuation de la chaleur et de l'écoulement de l'air intérieur de ventilation, et dispersent des pollutions à l'intérieur de la veine d'air.

L'invention est conçue pour remédier à ce risque et maîtriser les modifications éventuelles de structure du treillis pendant la vie de l'aube. Sous une définition générale, l'invention se rapporte à une aube creuse comprenant une peau extérieure, une cavité entourée par la peau et une structure en treillis composée de mailles tridimensionnelles enchevêtrées en formant un réseau continu dans la cavité, caractérisée en ce que le treillis présente au moins une section où toutes les mailles sont fabriquées avec une amorce de rupture pouvant se rompre quand l'aube est en service sur une turbomachine, et la section s'étend soit à une surface de raccordement de treillis à la peau extérieure soit à travers le treillis jusqu'à deux portions opposées de la peau extérieure.

La propriété de cette section ou de ces sections est leur caractère sécable, c'est-à-dire qu'elles présentent une structure plus faible ou sont construits en un matériau moins résistant, ce qui génère des amorces de rupture qui permettent quand les circonstances l'exigent (dans certaines conditions de service de l'aube sur une turbomachine) une désolidarisation locale ou globale entre le treillis et la peau extérieure, ou entre des portions successives du treillis. Les ruptures se produiront alors exclusivement aux endroits où elles ont été prévues, qui sont de petit volume en général par rapport au volume total du treillis. On arrivera donc à éviter les transmissions de contraintes originaires de l'extérieur de l'aube dans le treillis, et sa structure sera maintenue globalement intacte, sans donc modifier beaucoup les caractéristiques de perte de charge ou de transmission de chaleur à travers lui, ni générer de pollution.

Ces mailles à la résistance mécanique moindre ou à amorce de rupture peuvent être caractérisées de différentes façons : par une structure, par exemple une section droite plus faible que le reste des mailles, ou par un matériau moins résistant, par exemple de la façon que l'on indiquera plus loin.

Les sections occupées par les mailles à la résistance mécanique moindre seront envisagées, soit à la périphérie du treillis, à son raccordement à la face interne de la peau extérieure, ou à travers du treillis, jusqu'à des portions opposées de cette face interne. Dans le premier cas, le treillis pourra se détacher de la peau extérieure et devenir libre ; dans le second, il pourra se diviser en portions séparées d'une de l'autre ; et dans ces deux conceptions, le détachement ou la division pourra être partiel ou complet, selon que la section s'étendra ou non sur tout le raccordement à la peau extérieure ou sur tout le tour de l'aube.

Les documents cités ne divulguent pas de mailles pourvues d'amorces de rupture, c'est-à-dire affaiblies par rapport au reste du treillis ou même par rapport au reste d'une fibre, mais tout au plus des fibres dotées de résistances différentes, mais uniformes sur leur longueur. Les ruptures dans de tels treillis se feront alors selon des dessins imprévisibles, risquant de modifier de façon plus importante les caractéristiques d'évacuation de chaleur ou de résistance à l'écoulement interne d'air de refroidissement, ou de détacher complètement des portions du treillis qui pourront donc polluer le reste de la machine.

Les treillis envisagés pour l'invention peuvent encore être très variés en ce qui concerne les dispositions, dimensions et écartements des mailles par exemple. Ils peuvent être homogènes, ou au contraire avoir des caractéristiques différentes selon les régions de la cavité. Les mailles peuvent être constituées de poutres ou de facettes auxquelles on aura défini une épaisseur constante ou variable. On les fabriquera en général par un procédé d'addition de matière. Il sera alors facile de produire certaines des réalisations de l'invention, en adaptant un procédé classique où la fabrication s'effectue par dépôts successifs de couches de poudre alternant avec des fusions et solidifications de ces couches pour les solidariser avec la matière des couches précédentes s'étendant sous elles. Les mailles à la résistance mécanique moindre pourront alors être obtenues en procédant à des fusions et des solidifications incomplètes localement, pour donner alors des mailles de plus faible section droite ou de structure poreuse par exemple.

Les différents aspects caractéristiques et avantages de l'invention seront maintenant décrits en liaison aux figures suivantes, qui en représentent certains modes de réalisation purement illustratifs :
[Fig. 1] illustre une aube creuse de stator à treillis interne ;
[Fig. 2] : une représentation de zone sécable ;
[Fig. 3] : une autre représentation de zone sécable ;
[Fig. 4] : une description de zone sécable avec une vue de l'arbre en coupe longitudinale ;
[Fig. 5] : une description de zone sécable avec une vue de l'arbre en coupe transversale ;
[Fig. 6] : une description d'une autre zone sécable avec une vue de l'arbre en coupe longitudinale ;
[Fig. 7] : une description de cette autre zone sécable avec une vue de l'arbre en coupe transversale ;
[Fig. 8] : une représentation d'un treillis libre dans la cavité ;
[Fig. 9] : l'illustration d'un procédé de fabrication ;
[Fig. 10] : une autre réalisation d'arbre ;
[Fig. 11] : une autre réalisation d'arbre ;
[Fig. 12] : une coupe de l'une ou de l'autre de ces deux réalisations.

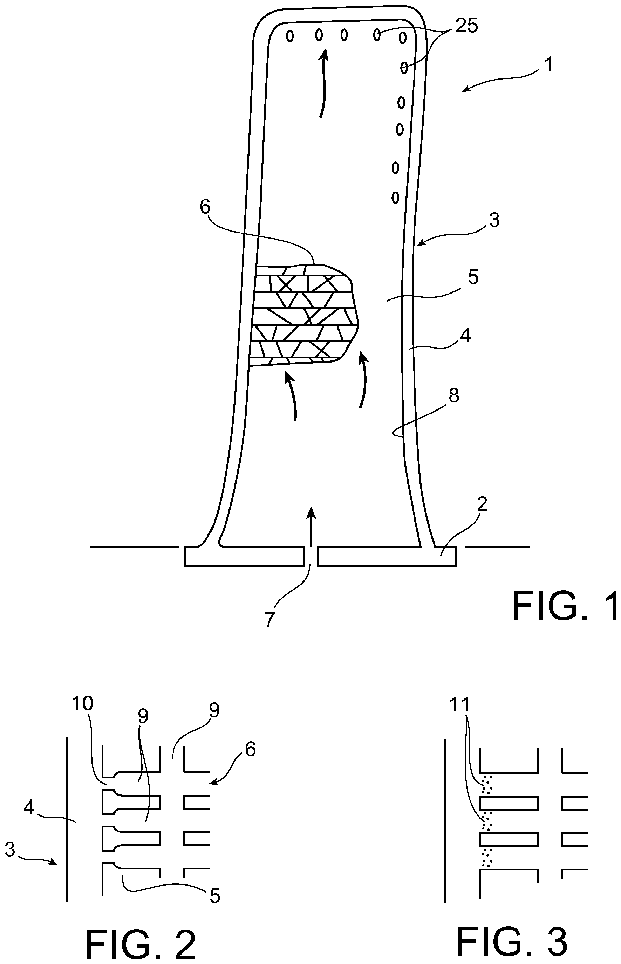

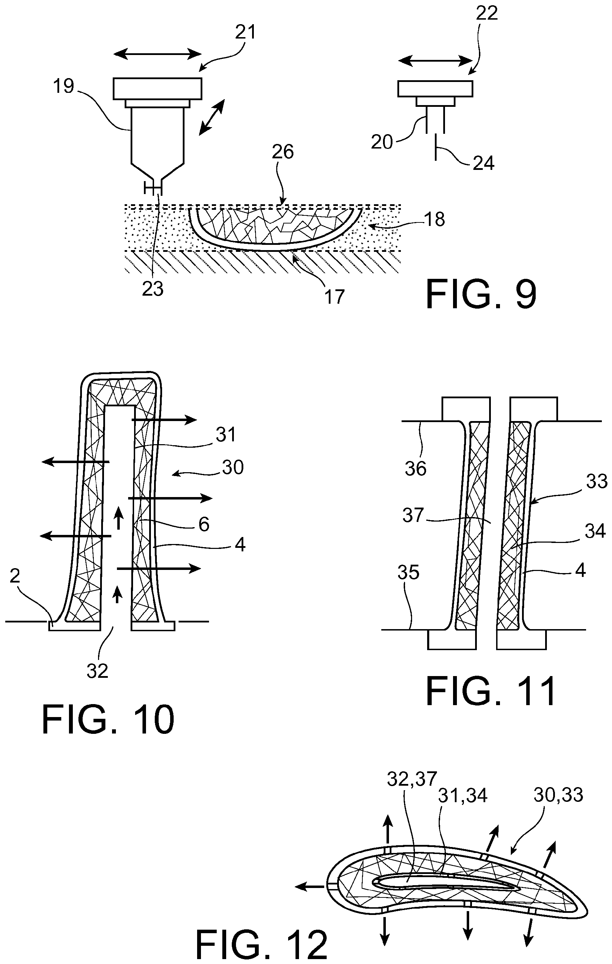

On se reporte à la figure 1. Une aube 1 creuse comprend un pied 2 et une pale 3 aérodynamique comprenant une peau extérieure 4 et une cavité 5 intérieure. L'invention pourrait être appliquée de toute façon à n'importe quelle aube creuse. La cavité 5 entièrement englobée par la peau extérieure 4 contient un treillis 6 composé de mailles 9 tridimensionnelles enchevêtrées pour former un réseau continu. La disposition des mailles 9, leur densité, leur forme et leur direction ne sont pas critiques pour l'invention. De l'air frais de ventilation originaire d'une alimentation qui n'est pas représentée passe par un conduit 7 traversant le pied 2, puis par la cavité 5, jusqu'à des orifices d'évacuation 25 qui peuvent être établis à travers la peau extérieure 4, dans la région de sommet de la pale 3 ou près de son bord de fuite. Le treillis 6 occupe tout le volume de la cavité 5 ou partiellement si un insert est intégré au centre de la cavité par exemple, et les extrémités de ses mailles 9 se raccordent à la face interne 8 de la peau extérieure 4. Une réalisation d'aube à insert est représentée à la figure 10, une autre à la figure 11, et une section droite de l'une ou de l'autre à la figure 12. L'aube 30 de la figure 10 comprend un insert 31 au centre, qui entoure une cavité centrale 32 libre, et cette cavité centrale 32, de forme cylindrique, sert à l'arrivée d'air de refroidissement par le pied 2. Le treillis 6 s'étend entre l'insert 31 et la peau extérieure 4, et l'air de ventilation le traverse en s'y dispersant après avoir quitté la cavité centrale 32 ; l'insert 31 et la peau extérieure 4 sont percés pour permettre à l'air de sortir de l'arbre 30 selon cette disposition.

La figure 11 illustre une aube 33 analogue si ce n'est que l'insert, maintenant 34, la traverse complètement entre le pied et la tête de l'aube 33, qui se raccordent à des viroles 35 et 36 concentriques respectives du stator de la turbomachine. L'air de ventilation peut circuler dans la cavité centrale 37 entourée par l'insert 34 dans un sens ou dans l'autre, tout en se dispersant dans le treillis 6 de la même façon qu'à la figure 10. La figure 12 est une coupe de l'aube 30 ou 33.

Les figures 2 et 3 sont un agrandissement partiel de la figure 1 dans deux modes de réalisation différents de l'invention et représentent un fragment de la peau extérieure 4 et les mailles 9 adjacentes. Elles montrent que certaines portions de celles-ci ont la propriété d'être sécables, et plus précisément de se rompre dans certaines conditions de service, notamment extrêmes ou accidentelles, quand l'aube 1 a été soumise à des contraintes suffisantes qui peuvent être dues notamment aux dilatations thermiques, aux forces centrifuges, aux forces de flexion, aux vibrations, etc. en service. Les parties sécables peuvent comprendre des parties à section réduite 10, des parties à structure altérée 11 poreuse ou discontinue, des parties où plus généralement le matériau a des propriétés de résistance mécanique moindres que celles du matériau employé ailleurs dans le treillis, et donc un matériau différent physiquement ou chimiquement, etc. ; tout moyen apte à affaiblir localement la résistance mécanique des mailles 9 en introduisant une hétérogénéité de leur structure ou de leur matériau peut être envisagé.

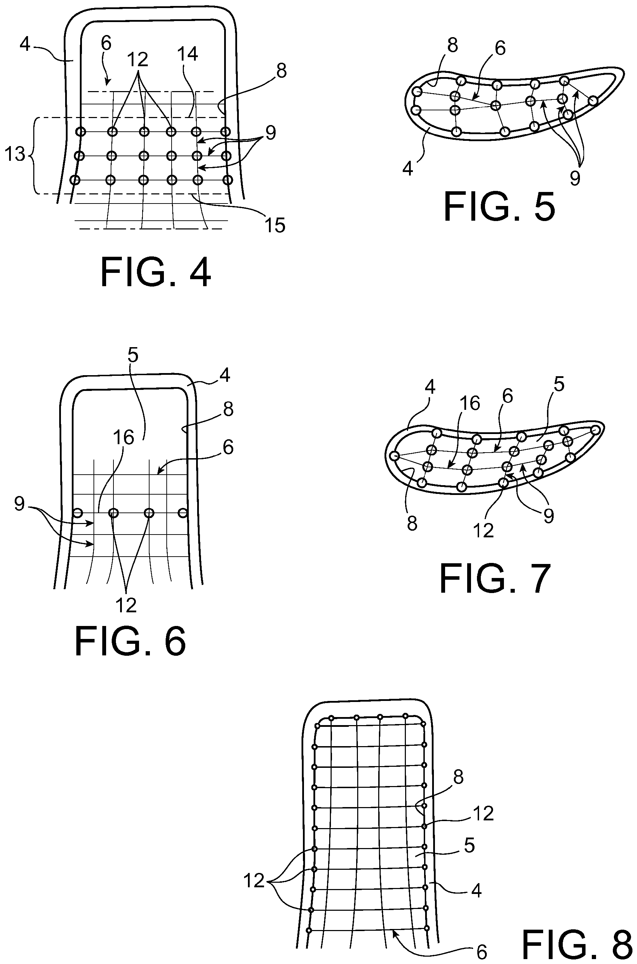

On se reporte aux figures 4, 5, 6 et 7. Les parties sécables, dorénavant référencées par 12, peuvent en théorie être placées à n'importe quel endroit du treillis 6. On les placera plutôt en pratique à des endroits où elles sont susceptibles d'être avantageuses. De tels endroits peuvent être des régions de raccordement des mailles 9 à la peau extérieure 4, comme on l'a représenté aux figures 2 et 3. Mais plus généralement, les parties sécables 12 seront localisées sur certaines sections du treillis 6, afin de favoriser une division nette et ordonnée du treillis 6 apte à réduire de façon sûre les contraintes internes, et toutes les mailles 9 présentes dans cette section porteront alors une partie sécable 12. Les figures 4 et 5 montrent une configuration importante, dans laquelle la section 13 porteuse des parties sécables 12 correspond à un raccordement du treillis 6 à la face interne 8 de la peau extérieure 4, éventuellement sur toute la superficie de raccord, ou, comme on l'a représenté, sur une bande de cette superficie, par exemple entre deux côtés parallèles 14 et 15, ici horizontaux, qui peuvent ou non s'étendre sur tout le tour de la pale 3. Ici non plus aucune obligation n'existe, et la section porteuse des parties sécables 12 pourrait s'étendre sur par exemple une partie de circonférence, une bande oblique, une bande verticale, ou une autre forme. Les figures 6 et 7 montrent une autre configuration importante, dans laquelle la section 16 porteuse des parties sécables 12 est une coupe à travers la cavité 5, les parties sécables 12 étant alors situées aussi à l'intérieur de la cavité 5, à distance de la peau extérieure 4. La section 16 pourra être horizontale comme on l'a représentée, ou, ici encore, verticale, oblique ou de n'importe quelle forme, courbure ou orientation. Dans cette configuration, la section 16 s'étendra souvent entre deux portions opposées de la face interne 8, donc à travers une dimension complète de la cavité 5, sans que cela soit nécessaire. Il sera possible, mais pas nécessaire non plus, que la section 16 s'étende jusqu'à un tour complet de la face interne 8, divisant alors complètement le treillis 6 en deux portions, ou non. Dans ces diverses exceptions, les parties sécables 12 pourraient être situées sur les longueurs libres des mailles 9 ou à leurs intersections, à des nœuds du treillis 6.

Si les parties sécables 12 se rompent, le treillis 6 est libéré à cet endroit, c'est-à-dire qu'il est séparé de la peau extérieure 4 dans le cas de la section 13, ou, dans une situation telle que celle des figures 6 et 7, divisé en parties séparées de part et d'autre de la section 16.

La figure 8 représente une situation typique, où les parties sécables 12 s'étendent sur toute la superficie de raccordement entre le treillis 6 et la face interne 8, et celui-là est donc complètement libre dans la cavité 5 quand les parties sécables 12 ont cédé.

Cette séparation ou cette division du treillis 6 permet d'y diminuer les contraintes pendant le service de la machine et évite le risque de rompre les mailles 9, plus résistantes en dehors des parties sécables 12, ailleurs. Leur structure est donc maintenue intègre dans presque tout le volume de la cavité 5, ce qui maintient presque parfaitement les propriétés initiales de perte de charge de l'écoulement de ventilation et d'évacuation de la chaleur, au moins par convection, même si la conduction depuis la peau extérieure 4 est diminuée, surtout dans une situation telle que celle de la figure 8.

Les aubes 1 à structure interne à treillis 6 sont en général construites par une technique d'addition de matière, qui peut être associée à un procédé de frittage. La figure 9 permet d'expliciter un procédé caractéristique de l'invention. Le dispositif comprend un plateau 17 sur lequel une ébauche 18 de l'aube 1 en cours de fabrication est posée ; un réservoir 19 d'alimentation de poudre et un laser 20 survolent le plateau 17 en étant montés sur des tables en X-Y 21 et 22, l'ébauche 18 qui permettent donc de les placer en-dessus de n'importe quel point.

La poudre peut tomber du bas du réservoir 19 par une buse 23 sur tous les points du plateau 17, et le laser 20 émet un faisceau 24 également dirigé vers ce plateau 17. L'aube 3 sera fabriquée en déposant successivement des couches 26 de poudre sur la matière déjà déposée de l'ébauche 18. Après chaque couche 26, le laser 20 est amené aux endroits destinés à donner la partie solide de l'aube 1, c'est-à-dire au-dessus de la peau extérieure 4 et du treillis 6, pour fondre localement la poudre à ces endroits, puis la laisser se solidifier. Les portions fondues de la couche 26 s'agrègent au reste de l'ébauche 18, qui est donc construite par surélévations successives ; la partie restant libre, à l'endroit de la cavité 5, est retirée à la fin du procédé par des orifices de vidange.

L'épaisseur de la couche 26 est imposée par un racleur 27 qui accompagne la buse 23 et peut être relevé après chaque dépôt de couche ; et la buse 23 peut être linéaire dans une direction horizontale Y, la table 22 étant alors mobile seulement dans l'autre direction horizontale X. Ces variantes du procédé sont insignifiantes sur l'invention.

Conformément à l'invention, le laser 20 effectue une fusion incomplète ou pas de fusion du tout aux endroits qui correspondront aux parties sécables 12. La matière correspondante sera alors partiellement agrégée au reste de la structure et sa structure pourra être poreuse ou discontinue. Il suffira de fournir moins d'énergie par le faisceau 24.

## Revendications

1. Aube (1) creuse comprenant une peau extérieure (4), une cavité (5) entourée par la peau et une structure en treillis (6) composée de mailles (9) tridimensionnelles enchevêtrées en formant un réseau continu dans la cavité (5), **caractérisée en ce que** le treillis présente au moins une section (13, 16), où toutes les mailles sont fabriquées avec une amorce de rupture pouvant se rompre quand l'aube est en service sur une turbomachine, et la section (13) s'étend soit à une surface de raccordement de treillis à la peau extérieure (4) soit à travers le treillis (6) jusqu'à deux portions opposées de la peau extérieure (4).

2. Aube creuse selon la revendication 1, **caractérisée en ce que** lesdites mailles (9) situées à ladite section (13, 16) ont une structure plus faible (10) que les mailles situées hors de ladite section.

3. Aube creuse selon la revendication 1, **caractérisée en ce que** lesdites mailles (9) situées à ladite section (13, 16) sont en un matériau moins résistant (11) qu'aux mailles situées hors de ladite section.

4. Aube creuse selon la revendication 1, 2 ou 3, **caractérisée en ce que** la section (16) s'étend sur une surface complète de raccordement du treillis (6) à la peau extérieure (4).

5. Aube creuse selon l'une quelconque des revendications 1 à 3, **caractérisée en ce que** la section (16) s'étend sur un tour complet de la peau extérieure (4) et divise le treillis (6) en deux parties complètement séparées.

6. Aube creuse selon l'une quelconque des revendications précédentes, **caractérisée en ce qu'**elle est fabriquée par fabrication additive.

7. Procédé de fabrication additive d'une aube (1) creuse selon l'une quelconque des revendications précédentes, comprenant des dépôts successifs de couches (26) de poudre alternant avec des fusions et solidifications des couches, **caractérisée en ce que** les fusions et solidifications sont incomplètes à ladite section (13, 16).

## Patentansprüche

1. Rotorschaufel (1) mit einer Außenhaut (4), einem von der Haut umgebenen Hohlraum (5) und einer Netzstruktur (6) aus dreidimensionalen Maschen (9), die unter Ausbildung eines durchgehenden Netzes in dem Hohlraum (5) verschlungen sind, **dadurch gekennzeichnet, dass** die Netzstruktur mindestens einen Abschnitt (13, 16) aufweist, in dem alle Maschen mit einer Sollbruchstelle hergestellt sind, die brechen kann, wenn sich die Schaufel im Betrieb an einer Turbomaschine befindet, und der Abschnitt (13) entweder an einer Verbindungsfläche der Netzstruktur mit der Außenhaut (4) oder durch die Netzstruktur (6) hindurch bis zu zwei gegenüberliegenden Bereichen der Außenhaut (4) verläuft.

2. Rotorschaufel nach Anspruch 1, **dadurch gekennzeichnet, dass** die in dem Abschnitt (13, 16) gelegenen Maschen (9) eine schwächere Struktur (10) als die außerhalb dieses Abschnitts gelegenen Maschen aufweisen.

3. Rotorschaufel nach Anspruch 1, **dadurch gekennzeichnet, dass** die in diesem Abschnitt (13, 16) gelegenen Maschen (9) aus einem weniger widerstandsfähigen Material (11) als die außerhalb dieses Abschnitts gelegenen Maschen bestehen.

4. Rotorschaufel nach Anspruch 1, 2 oder 3, **dadurch gekennzeichnet, dass** sich der Abschnitt (16) über eine vollständige Verbindungsfläche der Netzstruktur (6) mit der Außenhaut (4) erstreckt.

5. Rotorschaufel nach einem der Ansprüche 1 bis 3, **dadurch gekennzeichnet, dass** sich der Abschnitt (16) über eine volle Umrundung der Außenhaut (4) erstreckt und die Netzstruktur (6) in zwei vollständig getrennte Teile unterteilt.

6. Rotorschaufel nach einem der vorhergehenden Ansprüche, **dadurch gekennzeichnet, dass** diese durch additive Fertigung hergestellt wird.

7. Additives Fertigungsverfahren einer Rotorschaufel (1) nach einem der vorhergehenden Ansprüche, mit aufeinanderfolgenden Ablagerungen von Pulverschichten (26), die sich mit Verschmelzungen und Verfestigungen der Schichten abwechseln, **dadurch gekennzeichnet, dass** die Verschmelzungen und Verfestigungen an dem Abschnitt (13, 16) unvollständig sind.

## Claims

1. Hollow blade (1) comprising an external skin (4), a cavity (5) surrounded by the skin and a structure in the form of a lattice (6) composed of three-dimensional links (9) entwined to form a continuous network inside the cavity (5), **characterised in that** the lattice has at least one section (13, 16) where all the links are manufactured with a rupture initiating point capable of rupturing when the blade is in operation on a turbine engine, and the section (13) extends either to a lattice connection surface connecting with the external skin (4) or through the lattice (6) to two opposing portions of the external skin (4).

2. Hollow blade according to claim 1, **characterised in that** said links (9) located at said section (13, 16) have a weaker structure (10) than the links located outside said section.

3. Hollow blade according to claim 1, **characterised in that** said links (9) located at said section (13, 16) are made of a weaker material (11) than the links located outside said section.

4. Hollow blade according to claim 1, 2 or 3, **characterised in that** the section (16) extends over an entire connection surface connecting the lattice (6) with the external skin (4).

5. Hollow blade according to any one of claims 1 to 3, **characterised in that** the section (16) extends all the way around the external skin (4) and divides the lattice (6) into two completely separate parts.

6. Hollow blade according to any one of the preceding claims, **characterised in that** it is manufactured by additive manufacturing.

7. Additive manufacturing method for manufacturing a hollow blade (1) according to any one of the preceding claims, comprising successive depositions of layers (26) of powder alternating with the melting and solidification of the layers, **characterised in that** the melting and solidification operations are incomplete at said section (13, 16).
